# EUROPEAN PATENT SPECIFICATION

(11) **EP 2 548 843 B1**
(45) Date of publication and mention of the grant of the patent: **26.02.2020**
(21) Application number: 10847955.1
(22) Date of filing: 10.08.2010
(51) Int. Cl.: F27D 3/15, F27D 21/02

(54) **REMOTE CONTROL SYSTEM FOR CALCIUM CARBIDE TAPPING OPERATIONS**
FERNSTEUERUNGSSYSTEM FÜR CALCIUMCARBIDABSTICHOPERATIONEN
SYSTÈME COMMANDÉ À DISTANCE POUR OPÉRATIONS DE TARAUDAGE DE CARBURE DE CALCIUM

(30) Priority: 19.03.2010 JP 2010064522
(43) Date of publication of application: 23.01.2013
(73) Proprietor: Denka Company Limited, Tokyo 103-8338 (JP)
(72) Inventor: TANIMURA, Kyoichi, Itoigawa-city Niigata 949-0393 (JP); KAMAMOTO, Junpei, Itoigawa-city Niigata 949-0393 (JP); SAGAWA, Masanori, Itoigawa-city Niigata 949-0393 (JP); HOTTA, Humio, Itoigawa-city Niigata 949-0393 (JP)
(74) Representative: Feray, Valérie
(86) International application number: PCT/JP2010/063555
(87) International publication number: WO 2011/114546

(56) References cited:
- WO-A1-2009/039665
- CA-A1- 2 129 407
- JP-A- 51 095 904
- JP-A- 51 145 500
- JP-B2- 61 004 765
- JP-U- 47 023 408
- US-A- 4 037 828
- US-A- 4 087 083
- US-A1- 2011 007 773
- NYSSEN P ET AL: "Innovative visualisation technique at the electric arc furnace = Technologie innovante de visualisation au four électrique", REVUE DE METALLURGIE - CAHIERS D'INFORMATIONS TECHNIQUES, REVUE DE METALLURGIE. PARIS, FR, vol. 103, no. 9, 1 September 2006 (2006-09-01), pages 369-373, XP009108454, ISSN: 0035-1563, DOI: 10.1051/METAL:2006145

## Description

### TECHNICAL FIELD OF THE INVENTION

The present invention relates to a system for conducting a tapping work to take out calcium carbide from an electric furnace, by remote control.

### BACKGROUND OF THE INVENTION

Calcium carbide (CaC₂) has been used as raw materials of organic synthesis and fertilizer from old times. The calcium carbide is produced by heating quicklime (CaO) and coke (C) at 2000 °C or more in an electric furnace and making them react each other. A reaction formula is represented by CaO+3C → CaC₂+CO.

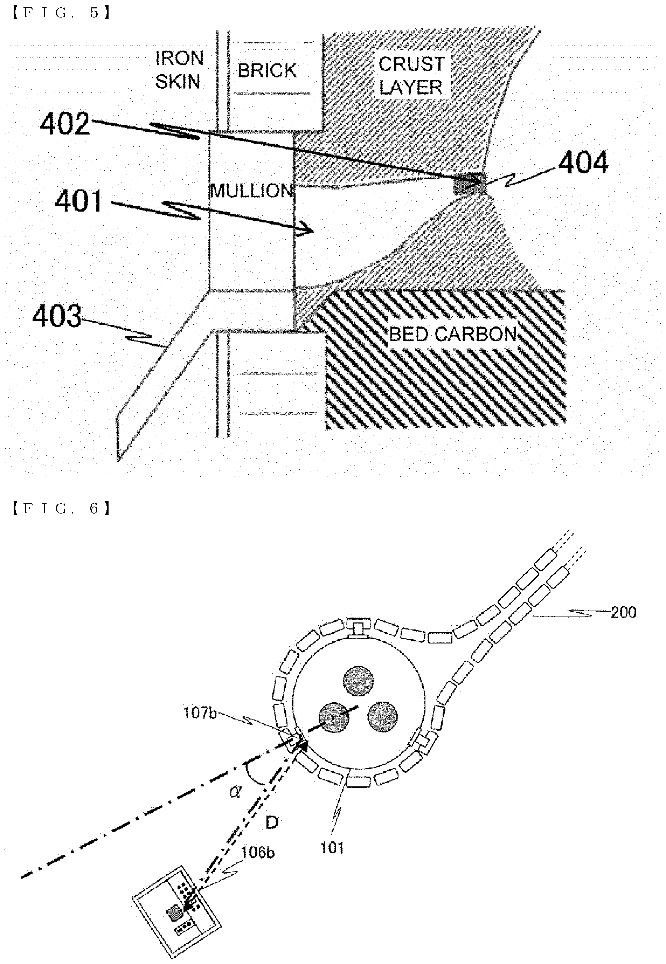

The calcium carbide produced in the electric furnace is taken from a tap dent which is provided at a lower portion of the electric furnace by a tapping work. The tapping work is roughly provided with the three steps of opening, taking and dent-sealing, and various tapping tools are used therein. With reference to Fig. 5, at the opening step, an opening (402) which is located behind a tap dent (401) is opened by pushing a graphite bar against the region in which the opening (402) is opened and a heat temperature against the graphite bar is generated by the arc discharge. After the opening, at the taking step, a sticking rod is stuck into a melted carbide pool under an electrode in the furnace, and the carbide is taken from the tap dent (401). The flowing out carbide is passed through a tub (403) and caught by a ladle. At the dent sealing step, a cylindrical clay referred to as a clay (404) is filled in the opening (402), and the carbide in the opening (402) is cooled to stop the flow-out of the carbide.

This tapping work involved a risk in a situation close to a high temperature, and a heavy labor is forcibly associated. For this reason, its mechanization has been progressed.

For example, Japanese Unexamined Patent Application Publication No. 51(1976)-145500A (patent document 1) describes a manipulator for a tapping work, characterized in that an arm having a mechanism drivable within a certain space is provided on a movable bogie, and the tapping work is carried out when a worker on a drive base provided in the above bogie or a different position operates a handle which contains a position servo mechanism or the position servo mechanism and a bilateral servo mechanism. According to this description, the tapping work that makes the most use of the function of the eyes of the worker can be carried out by using the manipulator. Also, the above patent document 1 describes that, since a force feedback mechanism is installed, the instrument of the manipulator can be freely used as if the instrument serves as the worker's limb.

Furthermore, United States patent application US 4,037,828 A describes an automatic tapping machine for a tapping operation.

### Patent documents

[Patent document 1] Japanese Unexamined Patent Application Publication No. 51(1976)-145500A
[Patent document 2] Japanese Unexamined Utility Model Application Publication No. 51(1976)-157512A
[Patent document 3] Japanese Unexamined Patent Application Publication No. 04(1992) -235808A

### SUMMARY OF THE INVENTION

### Technical problem

The manipulator described in the patent document 1 surely contributes to the mechanization of the tapping work. However, the plan for an industrial production is not discussed. Also, the manipulator described in the patent document 1 is based on the visual sensation of the worker. Thus, a work condition under which the tapping work is carried out in the vicinity of the electric furnace is still required. For this reason, the margin for improvement still remains in the safety of the tapping work for taking the high temperature material of about 2000 °C. Also, there is a case that tap dents are made for one electric furnace. However, in the manipulator described in the patent document 1, only the operation for each tap dent is considered. Thus, when different tapping works were performed on the plurality of tap dents in parallel, it was difficult to carry out the mutual communication between drivers and to know a work situation for each dent. Hence, it was impossible to carry out an integrative drive management in which the work efficiency was considered.

Accordingly, an object of the present invention is to provide a remote control system in which the mechanized tapping work can be carried out at an industrial scale. Another object of the present invention is to provide the remote control system for the tapping work of the calcium carbide in which the tapping work can be safer carried out. Still another object of the present invention is to provide the remote control system for the tapping work of the calcium carbide in which the tapping work can be carried out more efficiently.

### Solution to Problem

The present inventors have found out through their extensive investigations to solve the above subjects that the mechanized tapping work could be safely conducted at the industrial scale by suitably selecting the sizes of the tap dent and a tapping tool. Also, the inventors have found out that an idea in which the situation of each tap dent was imaged by a monitoring camera and reflected on a monitor or an idea in which arc sounds generated when the tap dents were opened were collected by a sound collector and transmitted by a speaker was effective in carrying out the remote control safely and accurately. Also, the inventors have found out that an idea in which the operations of the tapping machines independently performed on the respective tap dents were collectively managed and performed within the same operating room was effective in executing the tapping work more efficiently.

The present invention completed with the above findings as a base is, in a first aspect, a remote control system for tapping calcium carbide which encompasses:
an electric furnace for producing calcium carbide having a plurality of tap dents, each of the tap dents has an opening and an open area thereof is between 2000 and 8000 mm²;
a plurality of tapping machines for conducting a tapping work at each of the tap dents;
a plurality of tapping tools which are retainable and releasable by the tapping machines, each including a graphite bar used at an opening step and having a diameter between 50 and 100 mm, a sticking rod used at a taking step, having a portion which is inserted into the electric furnace and a diameter thereof is between 20 and 80 mm, and a dent sealing unit used at a dent sealing step and can contain a clay having a volume between 1000 and 4000 cm³;
a plurality of monitoring cameras configured to image each of the tap dents; and
a main tapping operation room including one or a plurality of manipulators for manipulating the respective tapping machines and a monitor for displaying images taken by the respective monitoring cameras.

In the remote control system according to the first aspect of the present invention, in another embodiment, the system further includes a plurality of sound collectors for collecting arc sounds generated at each of the tap dents; and
a speaker for transmitting the arc sounds collected by the respective sound collectors provided in the main tapping operation room.

In still another embodiment, in the remote control system according to the first aspect of the present invention, the sticking rod has a tip portion and a root portion connected to each other by welding, the tip portion is inserted into the electric furnace and has a length between 1/4 and 2/3 of a furnace body diameter of the electric furnace, and the root portion has a diameter which is longer by 5 to 30 mm than a diameter of the tip portion.

In still another embodiment, in the remote control system according to the first aspect of the present invention, the tapping tools further include a dent cleaner for removing the carbide deposited on the tap dents after the dent sealing step, wherein the dent cleaner is shorter in entire length than the sticking rod and has a tip portion and a root portion connected to each other by welding, the tip portion has a diameter between 40 and 70 mm and a length between 0.5 m and 2.5 m, and the root portion has a diameter which is longer by 5 to 30 mm than the diameter of the tip portion.

In still another embodiment, the remote control system according to the first aspect of the present invention further includes a ladle feeding apparatus which includes a plurality of ladles for taking the carbide, a plurality of bogies for loading the respective ladles, a rail for guiding the bogies, and a driving means for running the bogies, and wherein the main tapping operation room further includes a manipulating means for manipulating the ladle feeding apparatus.

In still another embodiment, a plurality of sub tapping operation rooms including a manipulator for operating the tapping machines and located at a position where one of the tap dents can be visually viewed and arc sounds generated at the one of the tap dents can be directly heard.

In another embodiment which does not belong to the invention, the sticking rod has a tip portion and a root portion connected to each other by welding, the tip portion is inserted into the electric furnace and has a length between 1/4 and 2/3 of a furnace body diameter of the electric furnace, and the root portion has a diameter which is longer by 5 to 30 mm than a diameter of the tip portion.

In still another embodiment which does not belong to the invention, the remote control system further includes a plurality of sound collectors for collecting arc sounds generated at each of the tap dents, and a speaker for transmitting the arc sounds collected by the respective sound collectors provided in the sub tapping operation rooms.

In still another embodiment which does not belong to the invention, in the remote control system, the tapping tools further include a dent cleaner for removing the carbide deposited on the tap dents after the dent sealing step, wherein the dent cleaner is shorter in entire length than the sticking rod and has a tip portion and a root portion connected to each other by welding, the tip portion has a diameter between 40 and 70 mm and a length between 0.5 m and 2.5 m, and the root portion has a diameter which is longer by 5 to 30 mm than the diameter of the tip portion.

In still another embodiment which does not belong to the invention, the remote control system includes a ladle feeding apparatus which includes a plurality of ladles for taking the carbide, a plurality of bogies for loading the respective ladles, a rail for guiding the bogies, and a driving means for running the bogies, and wherein the sub tapping operation rooms further include a manipulating means for manipulating the ladle feeding apparatus.

In still another embodiment which does not belong to the invention, the remote control system further includes a plurality of monitoring cameras configured to image each of the tap dents, and a monitor provided in the sub tapping operation rooms configured to display images of one of the tap dents for which the respective sub tapping operation rooms operate.

In another aspect which does not belong to the invention, a remote control system for tapping the calcium carbide, includes:
an electric furnace for producing calcium carbide having a plurality of tap dents, each of the tap dents has an opening and an open area thereof is between 2000 and 8000 mm²;
a plurality of tapping machines for conducting a tapping work at each of the tap dents;
a plurality of tapping tools which are retainable and releasable by the tapping machines, each including a graphite bar used at an opening step and having a diameter between 50 and 100 mm, a sticking rod used at a taking step, having a portion which is inserted into the electric furnace and a diameter thereof is between 20 and 80 mm, and a dent sealing unit used at a dent sealing step and can contain a clay having a volume between 1000 and 4000 cm³;
a plurality of monitoring cameras configured to image each of the tap dents;
a main tapping operation room including one or a plurality of manipulators for manipulating the tapping machines and a monitor for displaying images taken by the monitoring cameras; and
a plurality of sub tapping operation rooms including a manipulator for manipulating the tapping machines and located at a position where one of the tap dents can be visually viewed and arc sounds generated at the one the tap dents can be directly heard.

In another embodiment which does not belong to the invention, the remote control system includes a plurality of sound collectors for collecting arc sounds generated at each of the tap dents; and a speaker for transmitting the arc sounds collected by the respective sound collectors, provided in the main tapping operation room and/or the sub tapping operation rooms.

In still another embodiment which does not belong to the invention, the remote control system wherein the sticking rod has a tip portion and a root portion connected to each other by welding, the tip portion is inserted into the electric furnace and has a length between 1/4 and 2/3 of a furnace body diameter of the electric furnace, and the root portion has a diameter which is longer by 5 to 30 mm than a diameter of the tip portion.

In still another embodiment which does not belong to the invention, the remote control system, wherein the the tapping tools further include a dent cleaner for removing carbide deposited on the tap dents after the dent sealing step, wherein the dent cleaner is shorter in entire length than the sticking rod and has a tip portion and a root portion connected to each other by welding, the tip portion has a diameter between 40 and 70 mm and a length between 0.5 m and 2.5 m, and the root portion has a diameter which is longer by 5 to 30 mm than the diameter of the tip portion.

In still another embodiment which does not belong to the invention, the remote control system further includes a ladle feeding apparatus which includes a plurality of ladles for taking the carbide, a plurality of bogies for loading the respective ladles, a rail for guiding the bogies, and a driving means for running the bogies, and wherein at least one of the main tapping operation room or the sub tapping operation rooms further includes a manipulating means for manipulating the ladle feeding apparatus.

### Advantageous effect of the invention

According to the present invention, it is possible to safely carry out the mechanized tapping work at the industrial scale by suitably selecting the sizes of the tap dent and the tapping tool. Also, an action in which the situations of the respective tap dents are imaged by the monitoring cameras and reflected on the monitors and an action in which the arc sounds generated when the tap dents are opened are collected by the sound collectors and transmitted by the speaker can be remotely controlled safely and accurately. Also, since the operations of the tapping machines independently performed on the respective tap dents are collectively managed and performed within the same operating room, the tapping work can be carried out more efficiently.

### BRIEF DESCRIPTION OF THE DRAWINGS

Fig. 1 is a diagrammatic view showing a remote control system according to an embodiment of the present invention;
Fig. 2 is a diagrammatic configuration view of a tapping machine;
Fig. 3 is an entire diagrammatic view of a ladle feeding apparatus;
Fig. 4 shows a chucking mechanism of a chucking apparatus;
Fig. 5 is a diagrammatic view showing in the vicinity of a tap dent of an electric furnace; and
Fig. 6 shows a positional relationship of the electric furnace and a sub tapping operation room.

### DETAILED DESCRIPTION OF THE INVENTION

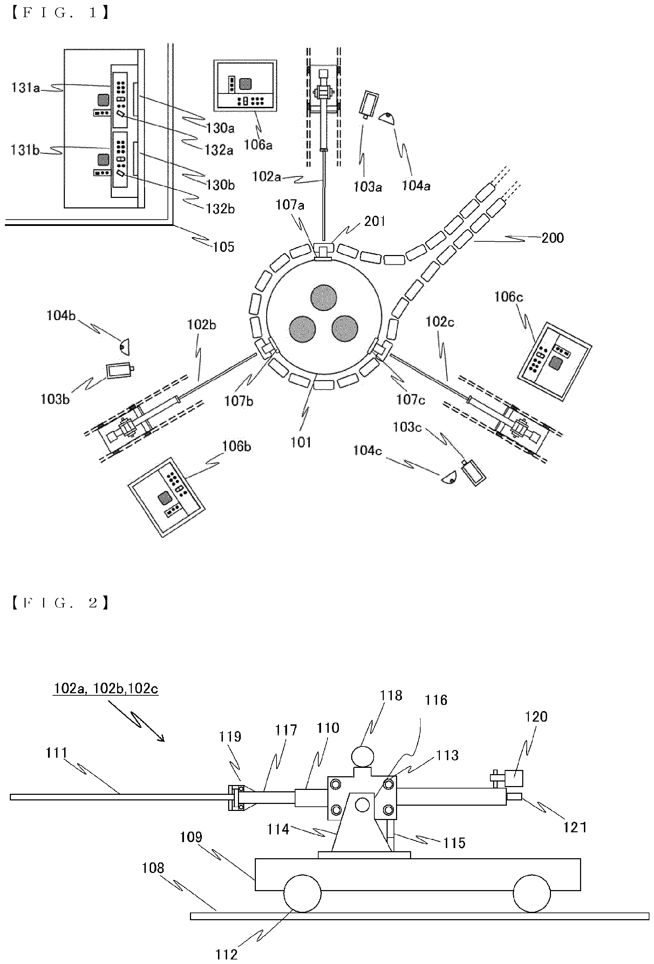

An embodiment of a remote control system for tapping the calcium carbide according to the present invention will be described below with reference to Figs. 1 to 3. Fig. 1 is a diagrammatic view showing the remote control system according to this embodiment. The remote control system includes an electric furnace (101) for producing calcium carbide, tapping machines (102a, 102b and 102c) each of which is installed for the tapping work, monitoring cameras (103a, 103b and 103c) each of which is provided to image each tap dent, and sound collectors (104a, 104b and 104c) each of which is provided to collect arc sounds generated at each tap dents. The remote control system according to the present embodiment further includes a main tapping operation room (105) located at a position (from which typically, respective tap dents cannot be directly checked by eyes) away from the electric furnace (101), and three sub tapping operation rooms (106a, 106b and 106c) each of which is located at a position from which each tap dents can be directly checked by the eyes. The remote control system according to the present embodiment further includes a ladle feeding apparatus (200) that continuously loads the ladles which hold the carbide taken from the tap dents.

### 1. Electric Furnace for Producing Calcium Carbide

The electric furnace (101) for producing calcium carbide is substantially-cylindrical-shaped and can be made of carbon material and heat-resistant brick so as to endure a high temperature. Inside the furnace, three electrodes are longitudinally inserted from above. The three electrodes are concentrically arranged at equal intervals of 120° with respect to the center of the electric furnace. Tap dents (107a, 107b and 107c) are formed at portions at which radial straight lines from the lower center of the electric furnace to the respective electrodes intersect the outer wall of the electric furnace. Below the respective electrodes, quicklime and coke react each other at the high temperature of about 2000 °C and thereby the carbide is produced. The tapping work causes the melted carbide to flow out from the tap dents (107a, 107b and 107c). The melted carbide flowing out from the tap dents is held in a ladle (201).

### 2. Tapping Machine

An operation of tapping machines will be described below with reference to Fig. 2. Each of the tapping machines (102a, 102b and 102c) is mainly provided with a bogie (109) which is movable on a rail (108), a movable arm (110) placed on the bogie (109), and a tapping tool (111) detachably attached to the tip of the arm (110). The bogie (109) can run on the rail (108) in a front-back direction by four wheels (112) that are driven by a driving apparatus such as a hydraulic motor, a gear motor or the like. The bogie includes a fixed hydraulic brake of a clamp type (whose illustration is omitted).

The arm (110) can carry out an axis direction (front-back direction) motion, a horizontally turning motion and a vertically turning motion, and those motions can be carried out individually or simultaneously. Those motions can be carried out in accordance with the method described in the patent document 1. Then, one example will be described below although it is not explained in detail. The axis direction motion of the arm (110) is directionally determined by two pairs of guide rolls (113) with which the arm is sandwiched from upper and lower portions. Then, the axis direction motion is carried out such that the rotating motion given by the driving apparatus is transmitted through a gear to the arm (110). The driving apparatus is operated on the basis of an electric signal from the main tapping operation room (105) or sub tapping operation rooms (106a, 106b and 106c). The horizontally turning motion of the arm (110) is carried out in linkage to the rotating motion of a vertical rotation axis (whose illustration is omitted), which is placed inside a frame (114) for supporting the arm (110) and rotatably geared. The rotating motion carried out by the driving apparatus is transmitted through the gear to the vertically rotational axis so that the vertically rotational axis carries out the rotating motion. The driving apparatus is operated on the basis of the electric signal from the main tapping operation room (105) or sub tapping operation rooms (106a, 106b and 106c). The vertically turning motion of the arm (110) is carried out in linkage to the vertical motion carried out by a hydraulic cylinder (115), with a pin joint (116) as a central axis. The hydraulic cylinder (115) is operated on the basis of the electric signal from the main tapping operation room (105) or sub tapping operation rooms (106a, 106b and 106c).

The arm (110) is hollow and cylindrical, and an arm arbor (117) is rotatably held therein. The arm (110) can be axially moved by a front-back hydraulic motor (118). A gear arranged in the back portion of the arm arbor (117) is linked to a hydraulic rotary actuator (120). Then, the operation of the hydraulic rotary actuator enables the arm arbor (117) to be rotated. The front-back hydraulic motor (118) and the hydraulic rotary actuator (120) are operated on the basis of the electric signal from the main tapping operation room (105) or sub tapping operation rooms (106a, 106b and 106c).

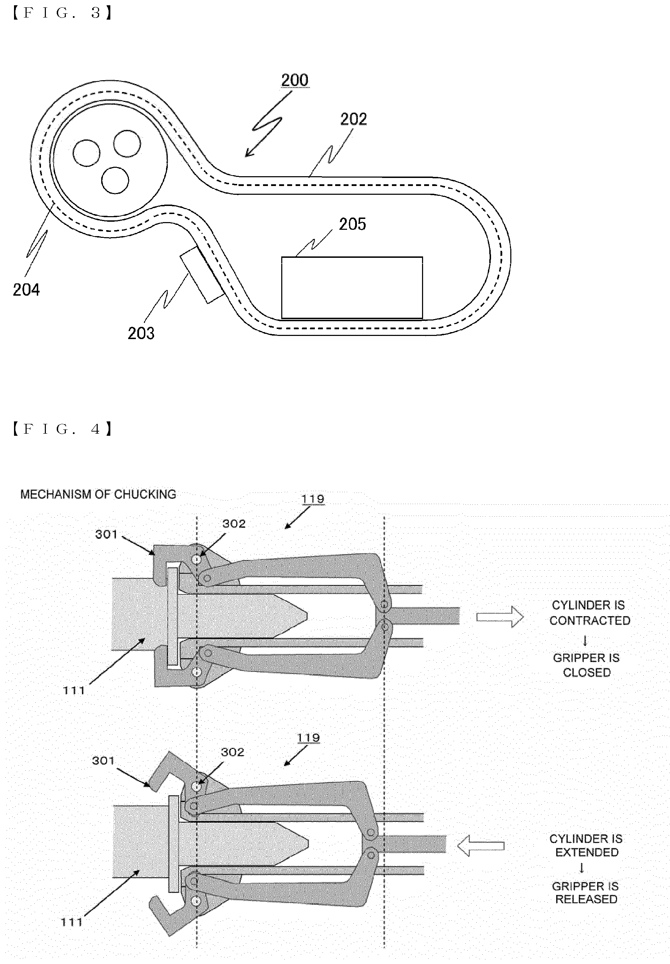

In response to the stage of the work, the tapping work requires the plurality of tapping tools (111), such as a graphite bar for generating the electric arc in the behind of the tap dent when the tapping is started, a sticking rod for promoting the tapping action during the taking operation or adjusting the taking quantity of the carbide, and the dent cleaner (whose tip is cylindrical) for filling the clay, which is configured to stop the flow-out of the carbide when the tapping is finished, in the tap dent. So, a chucking apparatus (119) of the tools is mounted at the tip of the arm arbor (117). Since on the basis of the axial motion of a clamp hydraulic cylinder (121), a claw (gripper) (301) is opened and closed with a fulcrum (302) as a center, the chucking apparatus (119) can grasp or release the tool (refer to Fig. 4). For this reason, even the tapping tool can be exchanged through the manipulator. In a situation in which the tapping tool is held, it is rotated with the axis line of the arm arbor (117) as a center. Consequently, the tapping tool can be rotated. The chucking apparatus (119) is operated on the basis of the electric signal from the main tapping operation room (105) or sub tapping operation rooms (106a, 106b and 106c).

The preferable specification of the tapping tool will be described below.

The graphite bar typically may have a shape of a slender cylinder. When its diameter is excessively great, it is difficult to form the opening at a predetermined position, and the opening becomes great. Then, when the tapping work is finished, the action for sealing the dent is made difficult, which makes the sealing action risky. Also, when the opening is excessively great, air is sucked into the opening. Thus, this promotes the decomposition of the generated carbide and also leads to the damage of the heat-resistant brick. On the other hand, when the diameter is excessively small, its strength will be insufficient. Hence, its durability is decreased, and it is easily fractured. Also, when the tap dent is excessively small, it becomes difficult to take the carbide. Accordingly, the diameter of the graphite bar is between 50 and 100 mm, and more preferably between 70 and 90 mm. When the graphite bar is not cylindrical, the cross-sectional area of the graphite bar is measured at 10 locations at equal intervals from the root to the tip, and the average value is calculated. Then, a diameter of a circle having the same area as the calculated average value is defined as the diameter of the graphite bar. The opening opened through the use of the graphite bar having the foregoing diameter has the cross-sectional area between 2000 and 8000 mm² and typically between 4000 and 6000 mm². When the opening having the foregoing size is used, the tapping work can be safely performed at a level at which the carbide can be industrially mass-produced.

The specification of the sticking rod will be described below. The sticking rod is required to have the length sufficient for the diameter of the electric furnace so that the tip can arrive at a carbide pool at which it grows below the electrode in the electric furnace. However, when the tip is excessively long, at this time, its operation is made difficult. Moreover, the breakage of the arm (110), the arm arbor (117) or the chucking apparatus (119) is required to be considered. For example, in the case of the electric furnace having an outer diameter between about 8 and 10 m, the length can be set between 4 and 7 m and preferably between 4 and 5 m.

Also, since the sticking rod, in particular, its tip is exposed to the high temperature portion inside the electric furnace, it is apt to be easily melted down. Thus, a design in which only the tip portion apt to be easily melted down can be exchanged is preferable from the standpoint of a cost reduction. So, it is designed that the tip and root portions of the rod are connected by welding and when the tip portion is melted down, only the tip portion can be exchanged.

When the length of the tip portion to be exchanged is short, it is possible to obtain the cost reduction effect. However, when the fact that the tip of the sticking rod arrives at the carbide pool where it grows below the electrode inside the electric furnace is considered, the length of the portion to be inserted into the electric furnace may be preferred to be the length between 1/4 and 2/3 of a furnace body diameter of the electric furnace. The length between 1/3 and 2/3 is more preferable, and the length between 2/5 and 3/5 is further more preferable. Thus, the length of the tip portion to be exchanged is preferred to coincide with this length. The furnace body diameter of the electric furnace indicates the length equal to two times the length between the inlet of the tap dent and the center of the electric furnace, and this is measured for each tap dent.

In the sticking rod, when the diameter of the portion to be inserted into the electric furnace is excessively great, the tap dent is made great beyond necessity, and as the case may be, there is a risk that the tap dent is broken. Also, in the graphite opening, the workability is made worse and its weight is increased. On the other hand, when the diameter is excessively small, it is made weak against heat and can not be used for a long time, and the strength is decreased. Thus, the sufficient function can not be carried out. So, the diameter of the portion that is inserted into the electric furnace is between 20 and 80 mm and preferably between 50 and 60 mm. On the contrary, from the standpoint of reserving the strength, the diameter of the root portion in the sticking rod is set greater than that of the tip portion. However, when the difference from the tip portion is excessively small, the life of the root portion is made short. On the other hand, when the difference is excessively great, the weight of the root portion is increased, which leads to the breakage of manipulator equipment. So, the diameter of the root portion is set greater than the diameter of the tip portion in the sticking rod, for example, by 5 to 30 mm, preferably by about 10 to 20 mm. When the sticking rod is not cylindrical, each diameter of the root and tip portions in the sticking rod is determined such that the cross-sectional area is measured at 10 locations at equal intervals from the root to the tip, and the average value is calculated, and then the diameter of a circle having the same area as the above average value is defined as each diameter of the root and tip portions in the sticking rod.

The material of the sticking rod may be preferably made of metal, from the standpoint of the strength reservation. For example, carbon steel or alloy steel can be used. In the sticking rod, although the materials of the root portion and the tip portion may be equal or different, they are preferable the same so that their welding properties and thermal expansion properties coincide.

The specification of the dent sealing unit will be described below. The quantity of the clay that is filled in the tap dent may be properly set on the basis of the size of the tap dent. However, in the case of the tap dent having the cross-sectional area between 2000 and 8000 mm², typically between 4000 and 6000 mm², the quantity of the clay is set between 1000 and 4000 cm³, typically between 2000 and 3000 cm³. The dent sealing unit is configured by a rod portion of the root and a cylindrical portion of the tip. The cylindrical portion is attached movably within a certain range in an axial direction with respect to the rod portion, and the tip of the rod portion is disk-shaped. Thus, the clay filled in the upper portion of the cylinder is pushed out in syringe style (for example, refer to Japanese Unexamined Utility Model Application Publication No. 51(1976)-157512). The cylindrical portion can have an inner diameter between 80 and 130 mm and a height between 300 and 900 mm and can typically have an inner diameter between 90 and 120 mm and a height between 500 and 700 mm.

In addition to the above tapping tool, it is also possible to use a bar-shaped (typically cylindrical) dent cleaner for removing the carbide deposited on the tap dent after the dent sealing step. Typically, the material of the dent cleaner may be preferred to be made of metal, from the standpoint of strength reservation. For example, carbon steel and alloy steel can be used. Also, the dent cleaning step is required to carry out an operation which is more delicate than that of the taking step. Thus, in order to improve the operability of the dent cleaner through the use of the tapping machine, the length of the dent cleaner is preferred to be shorter in entire length than the sticking rod. However, when the length is excessively short, at this time, the tapping machine must be made approach the electric furnace of the high temperature beyond necessity. This approach causes the trouble of the tapping machine. So, for example, the length of the dent cleaner is set to the length between about 50 and 70 %, as compared with the sticking rod.

Also, since the dent cleaner is brought into contact with the melted carbide of the high temperature, its tip is troubled, although its trouble is little as compared with the sticking rod. So, a design in which the dent cleaner is structured such that so as to be able to exchange only the tip portion, the root portion and the tip portion are linked by welding is preferable from the standpoint of cost reduction. In the tip portion, its diameter is preferably set between 40 and 70 mm from the reasons of its operability and durability, and more preferably set between 55 and 66 mm. On the contrary, from the standpoint of the strength reservation, the diameter of the root portion in the dent cleaner is set greater than that of the tip portion. However, when the difference from the tip portion is excessively small, the life of the root portion is made short. On the other hand, when the difference is excessively great, the increase in the weight of the root portion causes the manipulator equipment to be damaged. So, as compared with the diameter of the tip portion in the dent cleaner, the diameter of the root portion is increased, for example, by about 5 to 30 mm, preferably about 10 to 20 mm.

When the length of the tip portion in the dent cleaner is short, the cost reduction effect can be obtained. However, the tip portion is required to arrive at the vicinity of the opening of the depth in the tap dent. Thus, a certain length is required. Experience shows that the portion which is likely to be damaged is approximately equal to the length between the inlet of the tap dent of the high temperature and the opening located at its depth. Thus, conveniently, the length of the tip portion is also preferred to coincide with the above length. So, the preferable length of the tip portion in the dent cleaner is between 0.5 m and 2.5 m, and the length between 1 and 2 m is more preferable.

### 3. Monitoring Camera

Monitoring cameras (103a, 103b and 103c) image the tap dents (107a, 107b and 107c), respectively, and transmit their pictures to monitors (130a, 130b) in the main tapping operation room (105). Also, the pictures can be transmitted to the sub tapping operation rooms (106a, 106b and 106c). One monitoring camera may be placed for each tap dent. However, in order to accurately know the situation of the tap dent by imaging the tap dent from a plurality of angles, a plurality of monitoring cameras can be placed. Since the monitoring cameras (103a, 103b and 103c) are exposed to the high temperatures of the peripheries of the electric furnace, the monitoring cameras (103a, 103b and 103c) are desired to be cooled by water jackets.

### 4. Sound Collector

The main object of the sound collectors (104a, 104b and 104c) is to transmit the electric arc sounds when the tapping work is started, to the main tapping operation room (105). The arc sounds can be also transmitted to the sub tapping operation rooms (106a, 106b and 106c). In order that the tapping work is remotely controlled in a different room away from the electric furnace, it is naturally important that the picture transmitted by the monitoring camera is checked by the monitor. However, since the arc sounds generated at the tap dent are transmitted to the main tapping operation room (105), the worker who operates the tapping machine can carry out the opening work more accurately and quickly. Also, it is effective in order to avoid the contact with the metal such as an iron wall, a tub and the like near the tap dent, or to distinguish between an arc portion through the carbide and an arc portion in contact with the metal and the like.

Each of the sound collectors (104a, 104b and 104c) is desired such that so as not to pick up peripheral noise, a reflector of a circular cone type or parabola type can be oriented to the tap dent and further a microphone is placed at a focal point portion. In order to pick up the arc sounds, the microphone is preferred to have a directionality in which a front sensitivity is excellent, rather than a non-directionality. A position at which each of the sound collectors (104a, 104b and 104c) is placed is desired to be located at a position as close as possible to the tap dent, from the standpoint of picking up the arc sounds. However, when it is excessively close, it is likely to be troubled by heat and dust. So, it is desired to be placed at a position at which a distance from the tap dent is between 2 and 15 m, typically between 4 and 10 m.

### 5. Ladle Feeding Apparatus

Fig. 3 is an entire schematic view showing the ladle feeding apparatus (200). The ladle feeding apparatus (200) includes a plurality of ladles (201, refer to Fig. 1) for holding the carbide, bogies (whose illustrations are not shown) for loading the respective ladles, a rail (202) for guiding the bogies, and an anchor chain (204) that is driven along a track by a driving apparatus (203) such as a hydraulic motor or the like. The anchor chain (204) and the respective bogies are linked through linkage members, and the bogie is moved in linkage with the motion of the anchor chain. The bogie is linked in series to the forward and backward bogies, and a closed loop is consequently configured. The driving apparatus is operated on the basis of the electric signal from the main tapping operation room (105) or sub tapping operation rooms (106a, 106b and 106c).

The feeding method of the ladle is not limited to the anchor chain method. Then, a known feeding method can be employed. For example, it is possible to employ a method in which the leading bogie is linked to a wire, and a winch is used to tow.

With reference to Fig. 1, the melted carbide flowing out from the tap dents (107a, 107b and 107c) in the electric furnace (101) is passed through the tub and taken in the ladle (201). The ladle is loaded by the bogie and fed on the rail. Then, in order to cool and solidify the melted carbide, as necessary, the ladle is passed through a cooling room. After that, since the ladle is run on the rail reclined at a predetermined position, the ladle is automatically reclined, and the solidified carbide can be discharged. For the method of automatically reclining, Japanese Unexamined Patent Application Publication No. 04(1992) -235808A can be used as a reference. Also, when the ladle including the carbide is a vessel whose bottom is deep (exemplification: a depth exceeding 20cm), the cooling time of the melted carbide becomes long, and the cooling is not finished on the rail. So, in the case of the deep ladle, when the ladle is moved to a predetermined position, the ladle is lifted by a ceiling crane and then removed from the bogie. On the other hand, the empty ladle is loaded on the bogie, and the ladle may be exchanged. The carbide inside the ladle, which is removed from the bogie, is cooled in a predetermined cooling place (205).

### 6. Main Tapping Operation Room

A main tapping operation room (105) is installed at a safe position separated from the electric furnace (101) (for example, a position separated by a flat distance of 10 m or more, typically, 10 to 50 m from the center of the electric furnace). The main tapping operation room (105) includes manipulators (131a, 131b) for remotely operating the respective tapping machines (102a, 102b and 102c), monitors (130a, 130b) for displaying the pictures imaged by the respective monitoring cameras; and speakers (132a, 132b) for transmitting the arc sounds collected by the respective sound collectors.

Each of the manipulators has a switching function between the tapping machines and can remotely operate any of the tapping machines (102a, 102b and 102c). For this reason, one manipulator can operate all of the three tapping machines. However, when there are the plurality of tapping machines, it is possible to perform the simultaneous operations (the taking work, a opening preparation work, or a post-taking work or the like) on the plurality of tap dents. Thus, in the present embodiment, two manipulators, monitoring cameras and sound collectors each are placed. Moreover, since three manipulators, monitoring monitors and sound collectors each are installed, the three dents can be operated simultaneously.

An operator in the main tapping operation room operates the tapping machines while viewing the monitors, without directly viewing the tap dents. The situations of the respective tap dents can be checked within the same room through the monitors. Thus, by collectively managing the situations of the respective tap dents, it is possible to monitor the work situations of the different tap dents, and the flow-out of the carbide, by-products and the like from the dent on which the tapping is not performed. Thus, the trouble can be early discovered. Also, it becomes easy that the workers each of which is responsible for the different tap dent transmit the situations of the tap dents to each other. Since the plurality of monitoring cameras are installed at one tap dent, the tap dent can be checked from a plurality of angles. Hence, even the situation of the tap dent that can not be visually checked can be easily known. For this reason, the tapping work can be carried out more accurately and safely. Moreover, it is not necessary to remotely operate the tap dent while directly viewing. Thus, it is possible to carry out the switching operation between the manipulators (131a, 131b) remotely operated in the main tapping operation room (105). Hence, the work of the tap dent management, which is conventionally carried out under the condition of one person per dent, can be carried out under the condition of two persons per three dents. Hence, the working efficiency is improved.

Also, the arc sounds can be heard through the speaker. Thus, there is a merit that the opening work executed by the remote control can be carried out smoothly and accurately.

Each of the manipulators (131a, 131b) contains a foot pedal for carrying out the forward/backward movement and braking operation of the bogie (109). The driving apparatus and brake of the bogie are regulated on the basis of the electric signal corresponding to the movement of the foot pedal. Also, each of the manipulators (131a, 131b) includes an operation lever to carry out the forward/backward motion, the horizontally turning motion and the vertically turning motion of the arm (110). The operation of the arm (110) can be carried out by using a known serve mechanism or bilateral servo mechanism. The operation lever is preferably configured to have the same free degree as the forward/backward motion, horizontal turn and vertical turn of the arm so that the operator can easily operate the tapping machine. In association with the motion of the lever, a potentiometer is rotated to output the instruction of the arm operation. Similarly, the operation of the chucking apparatus and the operation of the rotation of the arm arbor can be operated by using the known serve mechanism or bilateral serve mechanism.

The main tapping operation room can contain an operation board to start/stop the respective hydraulic pumps and operate the setting apparatus for an oil temperature.

In the main tapping operation room, a monitor can be further installed for transmitting: the positions of the bogies in the respective tapping machines that are obtained by using an angle sensor and a position sensor; the position of the forward/backward direction of the arm; the angle of the horizontal turn, the angle of the vertical turn and the open/close state of the claw (gripper).

In the present embodiment, the operation switch of the ladle feeding apparatus can be installed such that the ladle feeding apparatus can be operated from the main tapping operation room. The operation lever of the ladle feeding apparatus can be also installed at the vicinity of the operation switch in the tapping machine. Conventionally, the tapping machine and the ladle feeding apparatus are independently operated. Thus, the worker who carries out the tapping work and the worker who feeds the ladles are separately required. However, since the tapping operation and the ladle feeding operation are carried out by the same worker, it is possible to attain the work saving (the worker who feeds the ladles can be reduced) and to protect the operation miss caused by the discrepancy of a feeding timing and the trouble of the drop in the product flow-out and the like. In particular, even if the tap dent is unexpectedly broken and the trouble requiring an emergent countermeasure occurs, it can be monitored by the monitor, and the empty ladle can be quickly moved to the corresponding tap dent, and the dent sealing work of the tap dent can be quickly carried out.

### 7. Sub Tapping Operation Room

At the time of a normal operation, only the main tapping operation room (105) is sufficient. However, the tapping work can be preferably carried out while the situation of the tap dent is directly viewed near the electric furnace (101) and the arc sounds are directly heard, when any trouble occurs or when the producing of the carbide starts up. When a process for producing the carbide is unstable, it is possible to carry out the changing operation for the minute open position in the opening work through the use of the tapping. So, each of the sub tapping operation rooms (106a, 106b and 106c) is accessorily installed at the position near the electric furnace (101), from which each tap dent can be directly checked by the eyes. It is also possible to install only the sub tapping operation rooms (106a, 106b and 106c) without installing the main tapping operation room (105).

For this reason, the sub tapping operation room can be installed at the position where one tap dent can be visually viewed and the arc sounds generated at the tap dent can be directly heard. With regard to this position, typically, a distance D from the tap dent to the operator in the operation room may be 30 m or less and preferably 15 m or less (refer to Fig. 6). However, when the position is excessively close, a safety problem occurs. Thus, the separate distance is preferred to be 5 m or more and further preferred to be 10 m or more. Also, typically, an angle α between a straight line extending from the center of the electric furnace to the tap dent and a straight line extending from the tap dent to the sub tapping operation room is between 0 and 80° and preferable between 5 and 45° and further preferable between 10 and 30°. In Fig. 6, the angle α is opened on the right side with respect to the straight line extending from the center of the electric furnace to the tap dent. However, it is evident that the angle α may be opened on the left side.

The tapping work from each of the sub tapping operation rooms (106a, 106b and 106c) operates the corresponding tapping machine by using the manipulator, similarly to the operation in the main tapping operation room (105), except that the monitor for reflecting the tap dent and the speaker for transmitting the arc sounds are not required. Also, this can have the operation lever for the ladle feeding apparatus.

As necessary, the monitor and the speaker can be placed even in the sub tapping operation rooms (106a, 106b and 106c). This is because the situation of the tap dent can be checked from the angle at which the visual check is difficult, and the arc sounds can be accurately heard.

As mentioned above, the embodiments of the present invention have been described with reference to the drawings. However, the present invention is not limited to those embodiments, and various variations can be employed. For example, as the operating means for the tapping machine and the ladle feeding apparatus, the particular operating means is listed in the embodiments of the present invention. However, with regard to the operating means such as a button, a switch, a handle, a foot pedal, a lever and the like, the means whose operation is easy may be properly selected and used on the basis of the operational content.

## Claims

1. A remote control system for tapping calcium carbide comprising:
an electric furnace (101) for producing calcium carbide having a plurality of tap dents (107a, 107b, 107c), each of the tap dents has an opening and an open area thereof is between 2000 and 8000 mm²;
a plurality of tapping machines (102a, 102b, 102c) for conducting a tapping work at each of the tap dents;
a plurality of tapping tools (111) which are retainable and releasable by the tapping machines, each comprising a graphite bar used at an opening step and having a diameter between 50 and 100 mm, a sticking rod used at a taking step, having a portion which is inserted into the electric furnace and a diameter thereof is between 20 and 80 mm, and a dent sealing unit used at a dent sealing step and can contain a clay having a volume between 1000 and 4000 cm³;
a plurality of monitoring cameras (103a, 103b, 103c) configured to image each of the tap dents; and
a main tapping operation room (105) comprising one or a plurality of manipulators for manipulating the respective tapping machines and a monitor for displaying images taken by the respective monitoring cameras.

2. The remote control system of claim 1, further comprising:
a plurality of sound collectors (104a, 104b, 104c) for collecting arc sounds generated at each of the tap dents; and
a speaker (132a, 132b) for transmitting the arc sounds collected by the respective sound collectors provided in the main tapping operation room.

3. The remote control system of claim 1 or 2, wherein the sticking rod has a tip portion and a root portion connected to each other by welding, the tip portion is inserted into the electric furnace and has a length between 1/4 and 2/3 of a furnace body diameter of the electric furnace, and the root portion has a diameter which is longer by 5 to 30 mm than a diameter of the tip portion.

4. The remote control system of any one of claims 1-3, wherein the tapping tools further comprise:
a dent cleaner for removing the carbide deposited on the tap dents after the dent sealing step, wherein the dent cleaner is shorter in entire length than the sticking rod and has a tip portion and a root portion connected to each other by welding, the tip portion has a diameter between 40 and 70 mm and a length between 0.5 m and 2.5 m, and the root portion has a diameter which is longer by 5 to 30 mm than the diameter of the tip portion.

5. The remote control system of any one of claims 1-4, further comprising a ladle feeding apparatus (200) which comprises:
a plurality of ladles (201) for taking the carbide;
a plurality of bogies for loading the respective ladles;
a rail (202) for guiding the bogies; and
a driving means (203) for running the bogies,
and wherein the main tapping operation room further comprises a manipulating means for manipulating the ladle feeding apparatus.

6. The remote control system of any one of claim 1-5, comprising:
a plurality of sub tapping operation rooms (106a, 106b, 106c) comprising a manipulator for operating the tapping machines and located at a position where one of the tap dents can be visually viewed and arc sounds generated at the one of the tap dents can be directly heard.

## Patentansprüche

1. Fernsteuerungssystem zum Abstechen von Calciumcarbid, umfassend:
einen elektrischen Ofen (101) zum Erzeugen von Calciumcarbid mit einer Vielzahl von Abstichzähnen (107a, 107b, 107c), wobei jeder der Abstichzähne eine Öffnung aufweist und ein Öffnungsbereich davon 2000 und 8000 mm² ist;
eine Vielzahl von Abstichmaschinen (102a, 102b, 102c) zum Durchführen einer Absticharbeit an jedem der Abstichzähne;
eine Vielzahl von Abstichwerkzeugen (111), die durch die Abstichmaschinen zurückgehalten und freigesetzt werden können, wobei jedes eine Graphitstange umfasst, die in einem Öffnungsschritt verwendet wird und einen Durchmesser zwischen 50 und 100 mm aufweist, einen Haftstab, der in einem Aufnahmeschritt verwendet wird, umfassend einen Abschnitt, der in den elektrischen Ofen eingeführt wird, und wobei ein Durchmesser davon zwischen 20 und 80 mm ist, eine Zahnversiegelungseinheit, die in einem Zahlversiegelungsschritt verwendet wird und einen Ton mit einem Volumen zwischen 1000 und 4000 cm³ enthalten kann;
eine Vielzahl von Überwachungskameras (103a, 103b, 103c), die konfiguriert ist, um jeden der Abstichzähne abzubilden; und
einen Haupt-Abstichoperationsraum (105), umfassend einen oder eine Vielzahl von Manipulatoren, um die jeweiligen Abstichmaschinen zu manipulieren, und einen Monitor, um Bilder anzuzeigen, die von den entsprechenden Überwachungskameras aufgenommen wurden.

2. Fernsteuerungssystem nach Anspruch 1, weiter umfassend:
eine Vielzahl von Schallsammlern (104a, 104b, 104c), um Bogenschall zu sammeln, der von jedem der Abstichzähne gesammelt wurde; und
einen Lautsprecher (132a, 132b) zum Übertragen des Bogenschalls, der von den entsprechenden Schallsammlern, bereitgestellt von dem Haupt-Abstichoperationsraum, gesammelt wurde.

3. Fernsteuerungssystem nach Anspruch 1 oder 2, wobei der Haftstab einen Spitzenabschnitt und einen Wurzelabschnitt umfasst, die miteinander durch Schweißen verbunden sind, der Spitzenabschnitt in den elektrischen Ofen eingeführt ist und eine Länge zwischen 1/4 und 2/3 des Durchmessers eines Ofenkörpers des elektrischen Ofens aufweist, und der Wurzelabschnitt einen Durchmesser aufweist, der um 5 bis 30 mm länger als ein Durchmesser des Spitzenabschnitts ist.

4. Fernsteuerungssystem nach einem der Ansprüche 1 - 3, wobei die Abstichwerkzeuge weiter Folgendes umfassen:
einen Zahnreiniger, um das Carbid zu entfernen, das auf den Abstichzähnen nach dem Schritt des Zahnversiegelns abgelegt ist, wobei die Gesamtlänge des Zahnreinigers kürzer als der Haftstab ist, der Haftstab einen Spitzenabschnitt und einen Wurzelabschnitt aufweist, die miteinander durch Schweißen verbunden sind, der Spitzenabschnitt einen Durchmesser zwischen 40 und 70 mm und eine Länge zwischen 0,5 m und 2,5 m aufweist und der Wurzelabschnitt einen Durchmesser aufweist, der um 5 bis 30 mm länger als der Durchmesser des Spitzenabschnitts ist.

5. Fernsteuerungssystem nach einem der Ansprüche 1 - 4, weiter umfassend ein Pfannenzuführgerät (200), das Folgendes umfasst:
eine Vielzahl von Pfannen (201), um das Carbit aufzunehmen;
eine Vielzahl von Drehgestellen, um die entsprechenden Pfannen zu laden;
eine Schiene (202), um die Drehgestelle zu führen; und
Antriebsmittel (203), um die Drehgestelle laufen zu lassen,
und wobei der Haupt-Abstichoperationsraum weiter ein Manipulationsmittel umfasst, um das Pfannenzuführgerät zu manipulieren.

6. Fernsteuerungssystem nach einem der Ansprüche 1 - 5, umfassend:
eine Vielzahl von Neben-Abstichoperationsräumen (106a, 106b, 106c), umfassend einen Manipulator, um die Abstichmaschinen zu betreiben, und angeordnet in einer Position, an der einer der Abstichzähne visuell zu beobachten und Bogenschall an einem der Abstichzähne direkt zu hören ist.

## Revendications

1. Système commandé à distance, destiné à forer du carbure de calcium, comprenant :
un four électrique (101) destiné à produire du carbure de calcium, présentant une pluralité de bosses de forage (107a, 107b, 107c), dans lequel chacune des bosses de forage présente une ouverture, et dans lequel une surface ouverte connexe est comprise entre 2 000 et 8 000 mm² ;
une pluralité de machines à forer (102a, 102b, 102c) en vue de mettre en œuvre un travail de forage au niveau de chacune des bosses de forage ;
une pluralité d'outils de forage (111) qui peuvent être retenus et libérés par les machines à forer, comprenant chacun une barre de graphite utilisée au cours d'une étape d'ouverture et présentant un diamètre compris entre 50 et 100 mm, une tige adhésive utilisée au cours d'une étape de prélèvement, présentant une partie qui est insérée dans le four électrique et dont le diamètre est compris entre 20 et 80 mm, et une unité de scellement de bosses utilisée au cours d'une étape de scellement de bosses et pouvant contenir une quantité d'argile dont le volume est compris entre 1 000 et 4 000 cm³ ;
une pluralité de caméras de surveillance (103a, 103b, 103c) configurées de manière à imager chacune des bosses de forage ; et
une salle d'opération de forage principale (105) comprenant un ou plusieurs manipulateurs destinés à manipuler les machines à forer respectives, et un moniteur destiné à afficher les images prises par les caméras de surveillance respectives.

2. Système commandé à distance selon la revendication 1, comprenant en outre :
une pluralité de collecteurs de sons (104a, 104b, 104c) pour collecter des sons d'arc générés au niveau de chacune des bosses de forage ; et
un haut-parleur (132a, 132b) destiné à transmettre les sons d'arc collectés par les collecteurs de sons respectifs fournis dans la salle d'opération de forage principale.

3. Système commandé à distance selon la revendication 1 ou 2, dans lequel la tige adhésive présente une partie de pointe et une partie de base reliées l'une à l'autre par soudage, dans lequel la partie de pointe est insérée dans le four électrique et présente une longueur comprise entre 1/4 et 2/3 d'un diamètre de corps de four du four électrique, et la partie de base présente un diamètre qui est plus long de 5 à 30 mm qu'un diamètre de la partie de pointe.

4. Système commandé à distance selon l'une quelconque des revendications 1 à 3, dans lequel les outils de forage comprennent en outre :
un nettoyeur de bosses destiné à enlever le carbure déposé sur les bosses de forage après l'étape de scellement de bosses, dans lequel le nettoyeur de bosses est plus court, sur toute la longueur, que la tige adhésive, et présente une partie de pointe et une partie de base reliées l'une à l'autre par soudage, dans lequel la partie de pointe présente un diamètre compris entre 40 et 70 mm, et une longueur comprise entre 0,5 m et 2,5 m, et la partie de base présente un diamètre qui est plus long, de 5 à 30 mm, que le diamètre de la partie de pointe.

5. Système commandé à distance selon l'une quelconque des revendications 1 à 4, comprenant en outre un appareil d'alimentation de poches de coulée (200) qui comprend :
une pluralité de poches de coulée (201) pour prélever le carbure ;
une pluralité de bogies pour charger les poches de coulée respectives ;
un rail (202) pour guider les bogies ; et
un moyen d'entraînement (203) pour exploiter les bogies, et dans lequel la salle d'opération de forage principale comprend en outre un moyen de manipulation pour manipuler l'appareil d'alimentation de poches de coulée.

6. Système commandé à distance selon l'une quelconque des revendications 1 à 5, comprenant :
une pluralité de salles d'opération de forage secondaires (106a, 106b, 106c) comprenant un manipulateur pour faire fonctionner les machines à forer, situé à une position où l'une des bosses de forage peut être visualisée, et où des sons d'arc générés au niveau de l'une des bosses de forage peuvent être directement entendus.
